# EUROPEAN PATENT APPLICATION

(11) **EP 2 752 578 A1**
(43) Date of publication of application: **09.07.2014**
(21) Application number: 12828212.6
(22) Date of filing: 31.08.2012
(51) Int. Cl.: F03D 11/00, F03D 9/00

(54) **WATER-COOLED WIND POWER GENERATION DEVICE, AND GENERATOR COOLING METHOD FOR WIND POWER GENERATION DEVICE**

(30) Priority: 02.09.2011 JP 2011191792
(71) Applicant: Kabushiki Kaisha Toshiba, Minato-ku Tokyo 105-8001 (JP)
(72) Inventor: TANIYAMA, Yoshihiro, Minato-ku, Tokyo 105-8001 (JP); KABATA, Yasuo, Minato-ku, Tokyo 105-8001 (JP); ARATA, Masanori, Minato-ku, Tokyo 105-8001 (JP); UEDA, Takashi, Minato-ku, Tokyo 105-8001 (JP)
(74) Representative: Kramer - Barske - Schmidtchen
(86) International application number: PCT/JP2012/072243
(87) International publication number: WO 2013/031982

(57) **Abstract**

A wind power generation apparatus includes a rotor unit (6) including blades configured to convert wind energy into a rotary motion, and an electric generator (7) configured to convert the rotary motion energy of the rotor unit into power includes a water cooling pipe (27) arranged between a lower stator coil (25a) and an upper stator coil (25b) which constitute a stator coil (25) attached to a slot groove of a stator (23) of the electric generator, and a water cooler (8) configured to supply cooling water into the water cooling pipe and remove heat generated in the stator coil.

## Description

### Technical Field

Embodiments described herein relate generally to a water-cooled wind power generation apparatus and, more particularly, to an electric generator cooling method for a wind power generation apparatus.

### Background Art

While the electric power demand is growing on a global scale, there have arisen needs of popularizing power generation apparatuses for generating clean renewable energy without producing carbon dioxide during power generation operations, including wind power generation, in place of power generation apparatuses using fossil fuels such as coal and petroleum from the perspective of global warming prevention.

There have been proposed various types of wind power generation apparatuses such as propeller type, Darrieus type, and gyromill type. Basically, however, a wind power generation apparatus is formed from a rotor unit including blades configured to convert wind energy into a rotary motion, a main shaft including a gear mechanism configured to transmit the rotary motion of the rotor unit to an electric generator, and an electric generator configured to convert the energy of the rotary motion of the main shaft into power.

Meanwhile, since an electrical loss generated during power generation is converted into heat, the temperature of the electric generator and, more particularly, the temperature of a stator coil or rotor coil rises. This causes dielectric breakdown of a coil having a low temperature limit or a mechanical failure in the electric generator due to a vibration of the rotor shaft caused by the temperature rise. For this reason, an electric generator cooling means is necessary in general.

As the electric generator cooling means, air cooling (air cooling method) or water cooling (water cooling method) is employed. A current air-cooled structure is configured to forcibly supply air into an electric generator and circulate it using an auxiliary blower fan. On the other hand, a water-cooled structure is configured to supply cooling water into a core and circulate it.

### Citation List

### Patent Literatures

Patent Literature 1: Jpn. Pat. Appln. KOKAI Publication No. 2003-343417
Patent Literature 2: Jpn. Pat. Appln. KOKAI Publication No. 2009-299656

### Disclosure of Invention

However, the above-described wind power generation apparatus is desired to be installed in a place where a wind of rated wind speed is readily obtained without influence of time or terrain because it converts wind energy into a rotary motion. For this reason, the single unit capacity of an electric generator tends to increase to cope with a decrease in appropriate locations to install wind power generation apparatuses, demands of offshore installation (offshore wind turbine installation), and the like.

However, since the amount of heat generated by an electric generator increases along with an increase in the single unit capacity, it is difficult to reliably remove the increased heat by the current air cooling means or water cooling means. This is because the increase in the heat is caused by the increase in the temperature of the stator coil or rotor coil included in the electric generator, but the cooling means does not have a structure capable of appropriately cooling the coils.

As a result, the upper limit of the density of a current suppliable to each stator coil or rotor coil included in the electric generator is restricted. In other words, when the sectional area of each coil increases, the current density lowers. However, the generator size or coil weight increases along with the increase in the sectional area of a coil, resulting in a large influence on the structural design and manufacture regarding maintenance of the strengths of structures such as a nacelle storing an electric generator, a tower, and the like.

### Solution to Problem

It is an object of the present invention to provide a water-cooled wind power generation apparatus capable of reliably removing heat generated in a stator coil as a structure that causes an increase in temperature of the internal structures of an electric generator and avoiding an increase in the generator size or coil weight, and an electric generator cooling method for a wind power generation apparatus.

In order to solve the above problem, according to an embodiment, there is provided a wind power generation apparatus including a rotor unit including blades configured to convert wind energy into a rotary motion, and an electric generator configured to convert rotary motion energy of the rotor unit into power, comprising a water cooling pipe arranged between a lower stator coil and an upper stator coil which constitute a stator coil attached to a slot groove of a stator of the electric generator, and a water cooler configured to supply cooling water into the water cooling pipe and remove heat generated in the stator coil.

According to another embodiment, there is provided an electric generator cooling method for a water-cooled wind power generation apparatus which includes a rotor unit including blades configured to convert wind energy into a rotary motion, an electric generator configured to convert rotary motion energy of the rotor unit into power, and a water cooler, and cools a stator coil of the electric generator, the method comprising acquiring physical variable data that affects a power generation amount of the electric generator, estimating, based on the acquired physical variable data, a required flow rate of the water cooler configured to supply water into a water cooling pipe arranged along the stator coil attached in a slot groove of a stator of the electric generator, and controlling, based on the estimated required flow rate of cooling water, a rotational speed of a pump intervening between the water cooler and a generator outlet-side end of the water cooling pipe, increasing/decreasing the flow rate of the cooling water supplied into the water cooling pipe, and removing heat generated in the stator coil.

### Brief Description of Drawings

FIG. 1 is a schematic view showing the basic arrangement of a horizontal axis wind turbine.
FIG. 2 is a view showing an example of a basic device arrangement in the nacelle of a horizontal axis wind turbine using a synchronous electric generator.
FIG. 3 is a view showing an example of a basic device arrangement in the nacelle of a horizontal axis wind turbine using an induction electric generator.
FIG. 4 is a partial sectional view showing the arrangement of a main component of a wind power generation apparatus according to each embodiment.
FIG. 5 is a side sectional view showing the arrangement relationship of a water cooling pipe in the stator coil of the electric generator of a cooled wind power generation apparatus according to the first embodiment.
FIG. 6 illustrates axial sectional views showing the inner diameter side of a stator taken along a line A - A' in FIG. 5 so as to explain the relationship between upper and lower stator coils and the water cooling pipe.
FIG. 7 is a side sectional view showing the arrangement relationship of water cooling pipes in the stator coil of the electric generator of a cooled wind power generation apparatus according to the second embodiment.
FIG. 8 illustrates axial sectional views showing the inner diameter side of a stator taken along a line B - B' in FIG. 7 so as to explain the relationship between upper and lower stator coils and the water cooling pipe.
FIG. 9 illustrates axial sectional views showing the inner diameter side of a stator so as to explain the relationship between the stator coil of an electric generator and a water cooling pipe in a cooled wind power generation apparatus according to the third embodiment.
FIG. 10 is a view for explaining another example of the form of the water cooling pipe used in the cooled wind power generation apparatus according to the third embodiment.
FIG. 11 is a block diagram showing an example of the arrangement of a supplied water flow control system and a generation output control system in a cooled wind power generation apparatus according to the fourth embodiment.
FIG. 12 illustrates graphs for explaining the relationship between the torque of an electric generator and the flow rate of supplied cooling water.
FIG. 13 is a block diagram showing another example of the arrangement of the supplied water flow control system and the generation output control system in the cooled wind power generation apparatus according to the fourth embodiment.
FIG. 14 illustrates graphs for explaining the relationship between the number of revolutions of the electric generator and the flow rate of supplied cooling water.
FIG. 15 is a block diagram showing still another example of the arrangement of the supplied water flow control system and the generation output control system in the cooled wind power generation apparatus according to the fourth embodiment.
FIG. 16 illustrates graphs for explaining the relationship between a wind velocity and the flow rate of supplied cooling water.
FIG. 17 is a block diagram showing yet another example of the arrangement of the supplied water flow control system and the generation output control system in the cooled wind power generation apparatus according to the fourth embodiment.
FIG. 18 illustrates graphs for explaining the relationship between the cooling water temperature on the outlet side of the electric generator and the flow rate of supplied cooling water.

Mode for Carrying Out the Invention Embodiments will now be described with reference to the accompanying drawings.

### (First Embodiment)

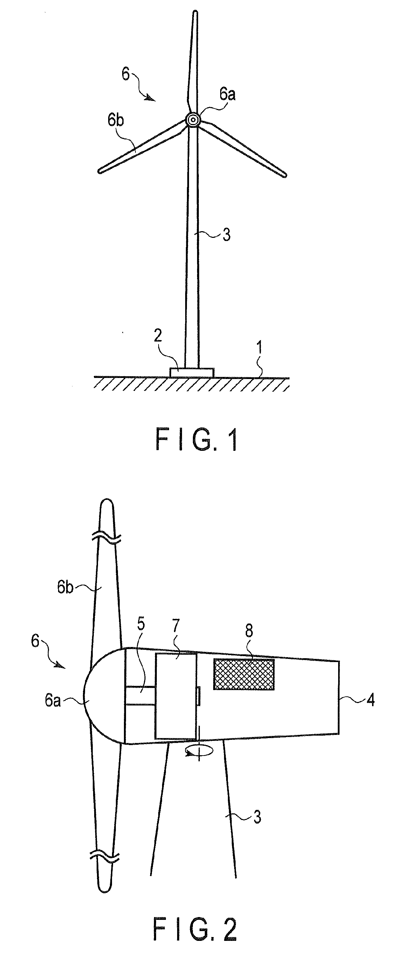

FIGS. 1, 2, and 3 are views showing the schematic arrangement of a water-cooled wind power generation apparatus according to this embodiment. Note that the water-cooled wind power generation apparatus shown in FIGS. 1, 2, and 3 uses a horizontal axis wind turbine. However, a vertical axis wind turbine may be used. A horizontal axis wind turbine is a wind turbine of such a type that makes the rotation axis horizontal with respect to the installation plane. A vertical axis wind turbine is a wind turbine of such a type that makes the rotation axis vertical with respect to the installation plane. Either type is applicable as a main component of this embodiment.

As shown in FIG. 1 and 2, the water-cooled wind power generation apparatus includes a tower 3 that stands on a base 2 installed on an installation plane 1 such as the ground, a nacelle 4, a main shaft 5, a rotor unit 6, an electric generator 7, and a water cooler 8.

The nacelle 4 is attached to the top of the tower 3. The main shaft 5 is axially supported in the nacelle 4 so as to be almost horizontal. The rotor unit 6 is attached to the distal end of the main shaft 5. The electric generator 7 is arranged on the rear end side of the main shaft 5. The electric generator 7 converts the energy of the rotary motion of the main shaft 5 rotating according to the rotation of the rotor unit 6 into power.

The nacelle 4 is axially supported on the top of the tower 3 so as to be rotatable. The nacelle 4 includes an angle change mechanism (not shown) configured to change the orientation of the rotation plane of the rotor unit 6 of the horizontal axis wind turbine to the wind direction measured by a wind vane (not shown).

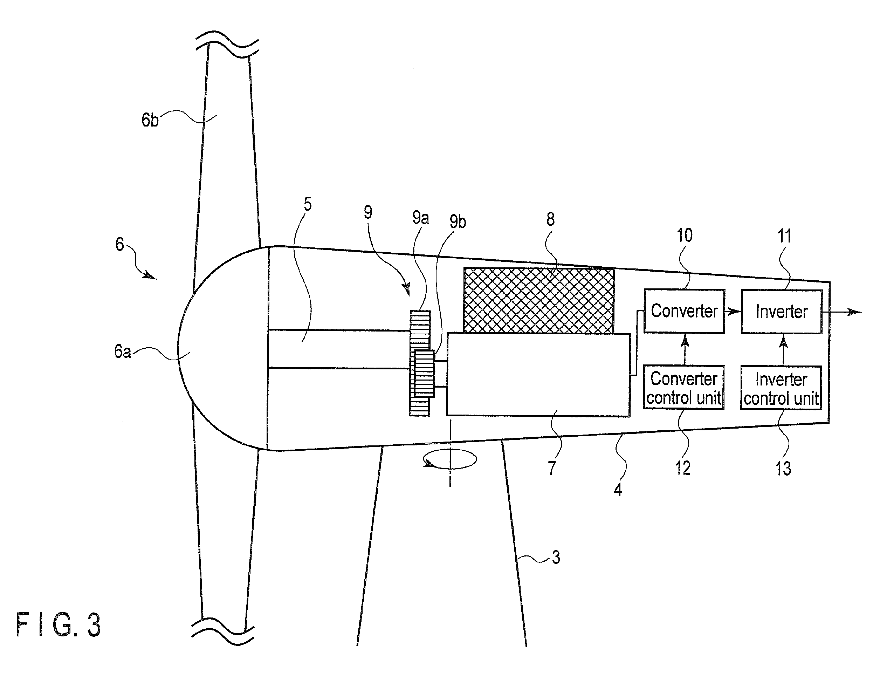

The nacelle 4 includes a lower cover and an upper cover (neither are shown). As shown in FIG. 3, the nacelle 4 incorporates various devices such as a gear unit 9, a converter 10, an inverter 11, a converter control unit 12, and an inverter control unit 13 as well as the main shaft 5, the electric generator 7, and the water cooler 8.

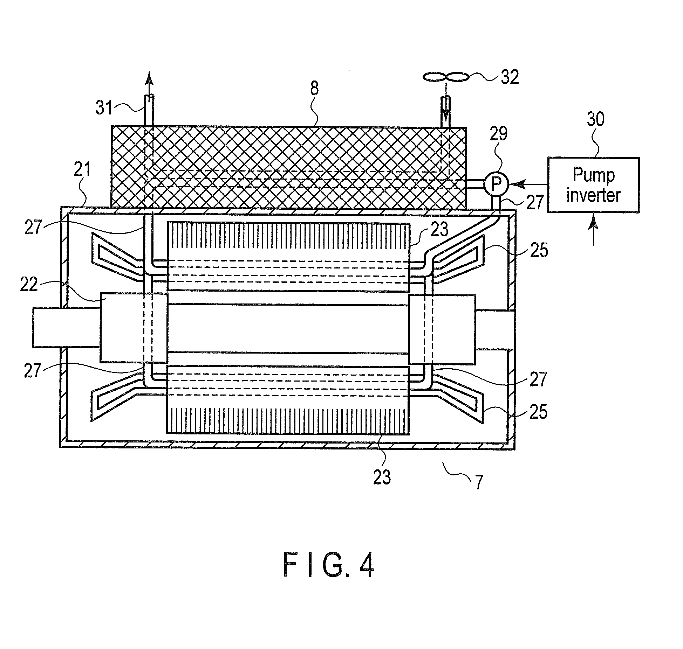

The gear unit 9 is provided between the main shaft 5 and the electric generator 7, as shown in FIG. 3. The gear unit 9 includes a main shaft-side gear 9a provided on the rear end side of the main shaft 5, and an electric generator-side gear 9b provided on the rotating shaft of the rotor of the electric generator 7 shown in FIG. 4. In the gear unit 9, the main shaft-side gear 9a and the electric generator-side gear 9b mesh with each other at a desired gear ratio. In general, the main shaft-side gear 9a and the electric generator-side gear 9b have a gear ratio of 1 : 100 and provide a speed increasing function of increasing the rotational speed. Note that the gear ratio is appropriately changed based on the design specifications of the electric generator 7 and those of the blades (to be described later) of the rotor unit 6.

Note that the main shaft 5 may directly be connected to the rotating shaft of the rotor of the electric generator without intervening the gears 9a and 9b.

As shown in FIGS. 1, 2, and 3, the rotor unit 6 includes a hub 6a and a plurality of blades 6b. The hub 6a is fixed to the distal end of the main shaft 5. The blades 6b are attached to the side of the hub 6a at equal intervals.

FIG. 4 is a view showing the arrangement of a main component of the water-cooled wind power generation apparatus according to the embodiment.

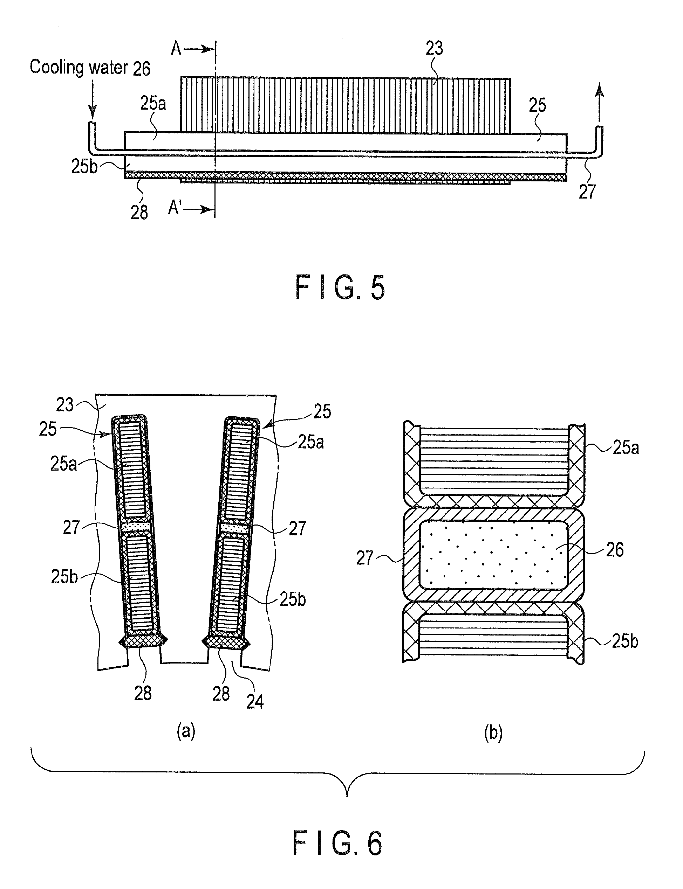

The electric generator 7 is stored in a generator frame 21. The generator frame 21 stores a rotor 22 axially supported to be rotatable, a stator 23 having a core laminated so as to surround the outer surface of the rotor 22, and stator coils 25 attached to slot grooves 24 (see FIG. 6) formed in the stator 23 having the laminated core.

Note that when the electric generator 7 is a wound-rotor induction electric generator, rotor coils (not shown) are attached to slot grooves (not shown) formed in the rotor 22. When the electric generator 7 is a permanent magnet electric generator, the rotor 22 using a permanent magnet is included.

The electric generator 7 has an arrangement as shown in FIGS. 4, 5, and 6. Note that FIG. 5 is a view showing the arrangement relationship between the stator coil 25 and a water cooling pipe 27 in a section taken along the laminating direction of the stator 23. In FIG. 6, (a) indicates a sectional view taken along a line A - A' in FIG. 5.

That is, as shown in FIGS. 4, 5, and (a) of FIG. 6, a lower stator coil 25a and an upper stator coil 25b included in the stator coil 25 are arranged in each slot groove 24. However, the water cooling pipe 27 filled with cooling water 26 is inserted between the lower stator coil 25a and the upper stator coil 25b. The cooling water supply-side end and the cooling water return-side end of the water cooling pipe 27 are introduced into the water cooler 8 through the generator frame 21. A wedge 28 configured to prevent the stator coil 25 from coming out is arranged on the lower side of the upper stator coil 25b.

In FIG. 6, (b) indicates a partially enlarged view showing the water cooling pipe 27 inserted between the lower stator coil 25a and the upper stator coil 25b and parts of the coils 25a and 25b in contact with the water cooling pipe 27. That is, the lower stator coil 25a and the upper stator coil 25b are in surface contact with the water cooling pipe 27 along its longitudinal direction.

Note that in the arrangement of the electric generator, one or both of the cooling water supply-side end and the cooling water return-side end of the water cooling pipe 27 may be, for example, passed between the lower stator coils 25a and the upper stator coils 25b attached to the plurality of adjacent slot grooves 24 and introduced into the next adjacent lower stator coils 25a and upper stator coils 25b in a meandering state, and the final end of the water cooling pipe 27 may be introduced into the water cooler 8.

As shown in FIG. 4, the water cooling pipe 27 is passed between the lower stator coils 25a and the upper stator coils 25b attached to one or an arbitrary number of slot grooves 24 and then arranged so as to form a desired shape, for example, a meandering shape in the water cooler 8. A flow control pump 29 is installed halfway through the water cooling pipe 27, for example, at the cooling water supply-side end of the water cooling pipe 27.

The flow control pump 29 is configured to make a pump inverter 30 variably control the rotational speed and adjust the flow rate of the supplied cooling water 26 in the water cooling pipe 27.

Note that an example of the water cooler 8 is a heat exchanger having a heat dissipation function, which corresponds to the radiator of an automobile. The water cooler 8 is mounted on the generator frame 21 while making its upper portion project from, for example, the upper cover of the nacelle 4 so that heat exchange with outside air is possible.

As another example of the arrangement of the water cooler 8, outside air may be brought in to cool the cooling water 26 in the water cooling pipe 27, as shown in FIG. 4. In this example, for example, an air cooling pipe 31 is arranged in the water cooler 8 from outside the nacelle 4. Outside air is brought in by a fan 32 and circulated in the air cooling pipe 31 to cool the cooling water 26 in the water cooling pipe 27 arranged to be in contact with the air cooling pipe 31. Alternatively, the water cooling pipe 27 may partially be passed through the air cooling pipe 31 having a liquid-tight interior to cool the cooling water 26 in the water cooling pipe 27.

The function of the above water-cooled wind power generation apparatus will be described next.

When the rotor unit 6 rotates upon receiving a wind force, the main shaft 5 attached to the rotor unit 6 rotates, and the rotor 22 rotates at a rotational speed corresponding to the gear ratio between the electric generator-side gear 9b and the main shaft-side gear 9a provided on the rear end side of the main shaft 5. When the rotor 22 rotates, an induced electromotive force is generated in the stator coil 25, and power generation is performed.

At the same timing as the start of power generation by the electric generator 7, the structures of the electric generator 7 generate heat. If the electric generator 7 is a wound-rotor induction electric generator, heat generated by the stator coil 25 and a rotor coil (not shown) accounts for a greater part of the heat generation amount. If the electric generator 7 is a permanent magnet electric generator including the rotor 22 using a permanent magnet, heat generated by the stator coil 25 accounts for a greater part of the heat generation amount.

When removing heat generated by the structures of the electric generator 7 during power generation by the electric generator 7 as described above, conventionally, a forced circulation blower fan or the like is provided to feed and circulate air in the electric generator 7, thereby forcibly cooling the structures. If the electric generator 7 is a rotor coil, a self fan effect obtained by rotation of the electric generator can cool the structures, although it is difficult to remove the heat generated in the stator coil 25.

In this embodiment, as shown in FIGS. 4, 5, and 6, the water cooling pipe 27 filled with the cooling water 26 is inserted between the lower stator coil 25a and the upper stator coil 25b, and a circulation path is formed so as to make the cooling water 26 pass through the water cooler 8 having a heat exchange function. Hence, the cooling water 26 passing through the water cooling pipe 27 heated by the coils 25a and 25b is cooled by heat exchange of the water cooler 8. It is therefore possible to reliably remove heat generated in the stator coil 25.

Additionally, in this embodiment, the air cooling pipe 31 configured to bring outside air into the water cooler 8 and circulate the air through the water cooler 8 is arranged. In addition, the water cooling pipe 27 is arranged so as to come into contact with the air cooling pipe 31 or pass through the air cooling pipe 31. With this arrangement, the hot water in the water cooling pipe 27 is cooled by heat exchange with the outside air circulating through the air cooling pipe 31. When the cooled water is passed between the lower stator coil 25a and the upper stator coil 25b, it is possible to reliably remove heat generated in the stator coil 25 (25a, 25).

### (Second Embodiment)

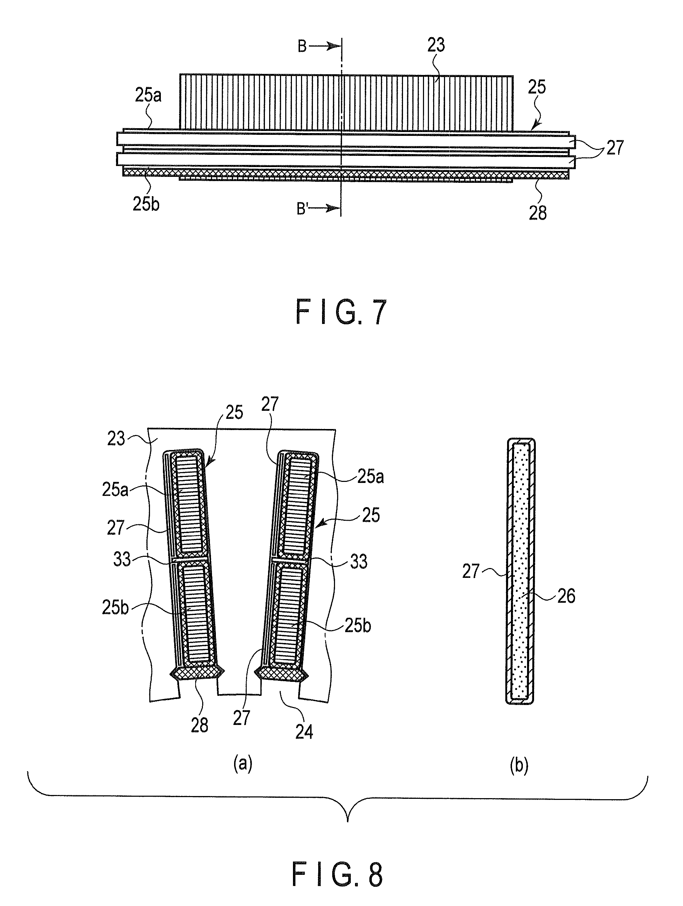

FIG. 7 and 8 are views for explaining a water-cooled wind power generation apparatus according to the second embodiment. Note that the overall arrangement of the water-cooled wind power generation apparatus and the arrangement relationship between an electric generator 7 and a water cooler 8 according to this embodiment are the same as in FIG. 3 and 4, and a repetitive description thereof will be omitted.

FIG. 7 is a view showing the arrangement relationship between a stator coil 25 and water cooling pipes 27 in a section taken along the laminating direction of a stator 23. In FIG. 8, (a) indicates a sectional view taken along a line B - B' in FIG. 7.

In the second embodiment, the water cooling pipes 27 are individually arranged along sides of a lower stator coil 25a and an upper stator coil 25b attached to a slot groove 24, as shown in FIG. 7 and (a) of FIG. 8. The cooling water supply-side end and the cooling water return-side end of each water cooling pipe 27 are introduced into the water cooler 8 through a generator frame 21.

In FIG. 8, (b) indicates a sectional view showing the water cooling pipe 27 individually arranged along one side of the lower stator coil 25a or the upper stator coil 25b. Cooling water 26 circulates in the water cooling pipe 27.

Note that in the arrangement shown in FIG. 7 and 8, one or both of the cooling water supply-side end and the cooling water return-side end of the water cooling pipe 27 may be, for example, individually arranged along sides of the lower stator coil 25a and the upper stator coil 25b attached to each of the plurality of adjacent slot grooves 24 and then arranged along sides of the next adjacent lower stator coils 25a and upper stator coils 25b in a meandering state, and after that, the final end of the water cooling pipe 27 may be introduced into the water cooler 8.

The rest of the arrangement of the water cooling pipe 27 and an arrangement related to the water cooler 8 are the same as in the first embodiment, and a repetitive description thereof will be omitted here.

Note that an insulating sheet 33 normally intervenes between the lower stator coil 25a and the upper stator coil 25b. However, in place of the insulating sheet 33, the water cooling pipe 27 may intervene between the lower stator coil 25a and the upper stator coil 25b, as in the first embodiment.

Hence, according to the embodiment having the above-described arrangement, the water cooling pipes 27 are arranged along sides of the lower stator coil 25a and the upper stator coil 25b and introduced into the water cooler 8 as shown in FIG. 4, thereby dissipating heat or performing heat exchange by an air cooling pipe 31. It is therefore possible to reliably remove heat generated in the stator coil 25 (25a, 25b).

Note that in the above embodiment, the water cooling pipes 27 are individually arranged along sides of the lower stator coils 25a and the upper stator coils 25b. However, for example, a water cooling pipe 27 having a long sectional shape may be arranged over both the lower stator coil 25a and the upper stator coil 25b and extracted from both sides of the stator 23.

### (Third Embodiment)

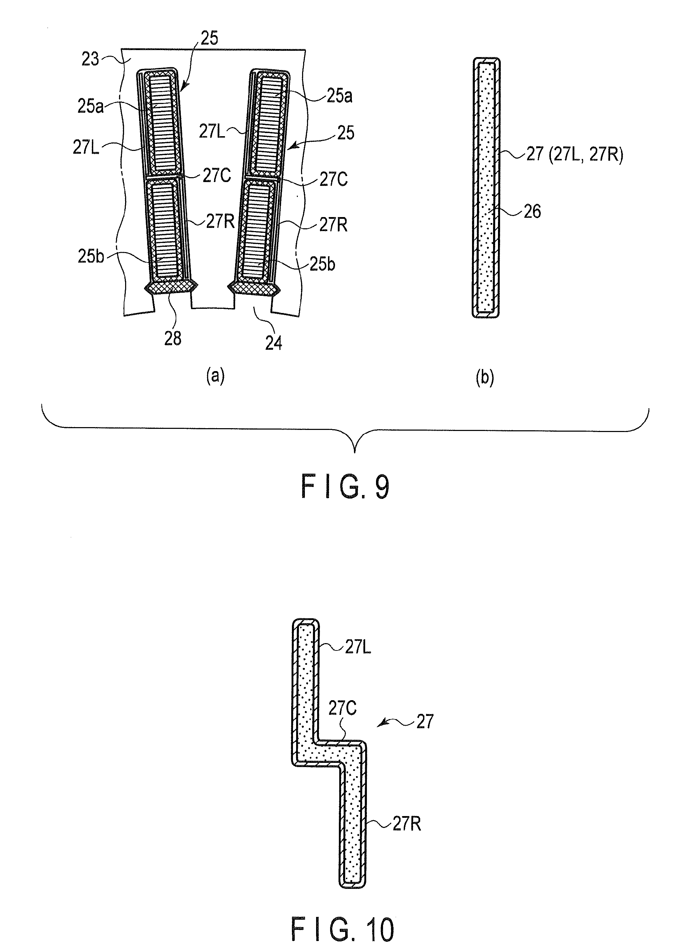

FIG. 9 illustrates views for explaining a water-cooled wind power generation apparatus according to the third embodiment. Note that (a) of FIG. 9 indicates a sectional view taken along a line B - B' in FIG. 7.

In the third embodiment, each water cooling pipe 27 is arranged along one side of a corresponding one of a lower stator coil 25a and an upper stator coil 25b, as shown in (a) of FIG. 9. However, as the arrangement form of the water cooling pipes 27, they are arranged along opposing sides of the lower stator coil 25a and the upper stator coil 25b. More specifically, in the arrangement shown in (a) of FIG. 9, for example, when a side water cooling pipe 27L is arranged along the left side of the lower stator coil 25a in FIG. 9, a side water cooling pipe 27R is reversely arranged along the right side of the upper stator coil 25b in FIG. 9.

In FIG. 9, (b) indicates a sectional view showing the water cooling pipes 27R and 27L arranged along opposing sides of the lower stator coil 25a and the upper stator coil 25b. Cooling water 26 circulates in the water cooling pipe 27R or 27L.

Hence, according to the embodiment having the above-described arrangement, the side water cooling pipes 27L and 27R are arranged along alternating sides of the lower stator coil 25a and the upper stator coil 25b and introduced into a water cooler 8 as shown in FIG. 4, thereby obtaining a heat dissipation function or performing heat exchange by an air cooling pipe 31. It is therefore possible to reliably remove heat generated in a stator coil 25 (25a, 25b).

Note that in the above embodiment, the side water cooling pipe 27L is arranged along one side (left side in FIG. 9) of the lower stator coil 25a, and the side water cooling pipe 27R is arranged along the other side (right side in FIG. 9) of the upper stator coil 25b. However, for example, as shown in FIG. 10, an intermediate water cooling pipe 27C arranged between the coils 25a and 25b may be connected between the side water cooling pipes 27L and 27R respectively arranged along the one side and the other side, thereby arranging the water cooling pipe 27 having, for example, a crank-shaped section.

Additionally, in the above embodiments, the water cooling pipe 27 is arranged between the lower stator coil 25a and the upper stator coil 25b or along a side of each of the stator coils 25a and 25b. However, other than these arrangements, a forced circulation blower fan or the like may be provided as in a conventional technique.

### (Fourth Embodiment)

Control of the flow rate of cooling water 26 supplied into a water cooling pipe 27 will be described next with reference to the accompanying drawings.

### (1) Control of the cooling water flow rate based on the rotational speed of an electric generator 7

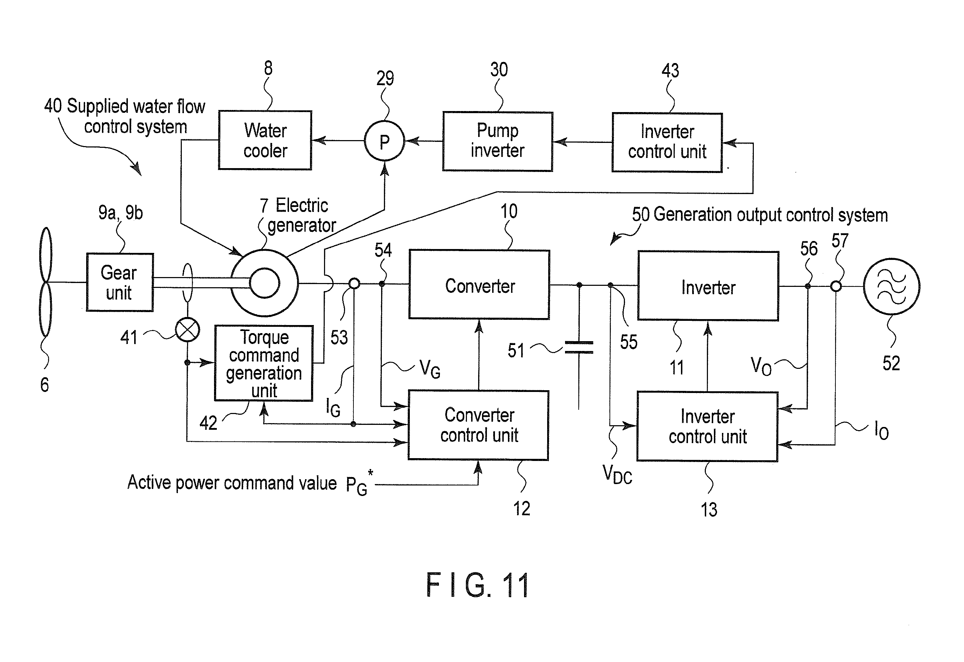

FIG. 11 is a block diagram showing an arrangement indicating a supplied water flow control system 40 configured to control the cooling water flow rate in accordance with a torque obtained based on the detected rotational speed and the like of the electric generator 7 and a generation output control system 50 conventionally used in general. Note that although a converter 10 and an inverter 11 of the generation output control system 50 need to have a three-phase arrangement, the three-phase arrangement is omitted here, and a simple structure is illustrated.

The supplied water flow control system 40 that is the main component of a water-cooled wind power generation apparatus will be described first.

The supplied water flow control system 40 is provided with a revolution sensor 41, a torque command generation unit 42, and an inverter control unit 43. The revolution sensor 41 measures the rotational speed of the electric generator 7. The revolution sensor 41 is formed from, for example, a tachometer. The torque command generation unit 42 generates a torque command value using at least the rotational speed measured by the revolution sensor 41 and an output current I_{G} of the electric generator 7, and outputs it. The inverter control unit 43 controls a pump inverter 30 configured to set the rotational speed of a flow control pump 29 so as to output a cooling water flow rate corresponding to the torque command value output from the torque command generation unit 42.

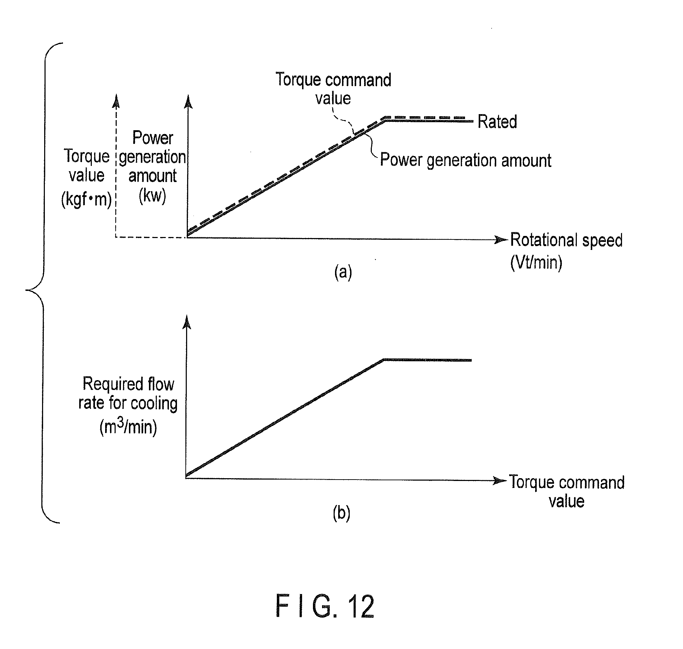

In general, as the rotational speed (Vt/min) of the electric generator 7 rises, the power generation amount increases as indicated by (a) of FIG. 12. However, when the rotational speed of the electric generator 7 is a predetermined rotational speed or more, the power generation amount is saturated at a rated power generation amount (kW). On the other hand, when the rotational speed (Vt/min) of the electric generator 7 rises, the output current I_{G} of the electric generator 7 increases, and the torque command value increases accordingly.

Hence, as indicated by (b) of FIG. 12, when the rotational speed of the electric generator 7 is high, and the torque command value becomes large accordingly, the power generation amount increases. Hence, the required flow rate (m³/min) of the cooling water 26 needs to be increased.

The torque command generation unit 42 generates the torque command value based on the rotational speed of the electric generator 7 and the output current I_{G} of the electric generator 7, and after that, sends the torque command value to the inverter control unit 43. In this case, the inverter control unit 43 on/off-controls the pump inverter 30 to increase the rotational speed of the flow control pump 29 in accordance with an increase in the torque command value, thereby controlling the rotational speed of the flow control pump 29.

As a result, the cooling water 26 is supplied to and circulated in the water cooling pipe 27 attached to a stator coil 25 while the flow rate of the cooling water 26 cooled by a water cooler 8 changes in accordance with the torque command value. It is therefore possible to reliably remove heat generated in the stator coil 25.

The generation output control system 50 will briefly be explained.

In the generation output control system 50, a three-phase alternating current power grid 52 is connected to the output side of the electric generator 7 via the converter 10, a smoothing capacitor 51, and the inverter 11. The converter 10 is controlled by a converter control unit 12, and the inverter 11 is controlled by an inverter control unit 13.

When the electric generator 7 is rotated by wind energy, an internal induced voltage V_{E} of the electric generator 7 is generated in accordance with its rotational speed. At this time, the converter control unit 12 controls the gate of a semiconductor switching element included in the converter 10 based on an externally preset active power command value P_{G}* such that a generator active power P_{G} formed from the output current I_{G} and a terminal voltage V_{G} respectively detected by a current detector 53 and a voltage detector 54 provided on the output side of the electric generator 7 obtains a desired value, thereby controlling the terminal voltage V_{G} of the electric generator 7 and converting it into a DC voltage. The smoothing capacitor 51 smoothes this voltage.

On the other hand, the inverter control unit 13 receives a DC voltage V_{DC} detected by a voltage detector 55 provided on the output side of the smoothing capacitor 51 and an inverter output current I_{O} and an output voltage V_{O} respectively detected by a current detector 57 and a voltage detector 56 provided on the output side of the inverter 11. The inverter control unit 13 controls the inverter 11 such that the DC voltage V_{DC} becomes constant, thereby converting the DC voltage into an AC power having the same frequency as the power grid 52. The AC power is supplied to the power grid 52 as the power generated by the electric generator 7.

Note that the generation output control system 50 is not limited to the illustrated arrangement, and generation output control systems having various conventionally known arrangements can also be used.

### (2) Example of control of the cooling water flow rate based on the number of revolutions of the electric generator 7

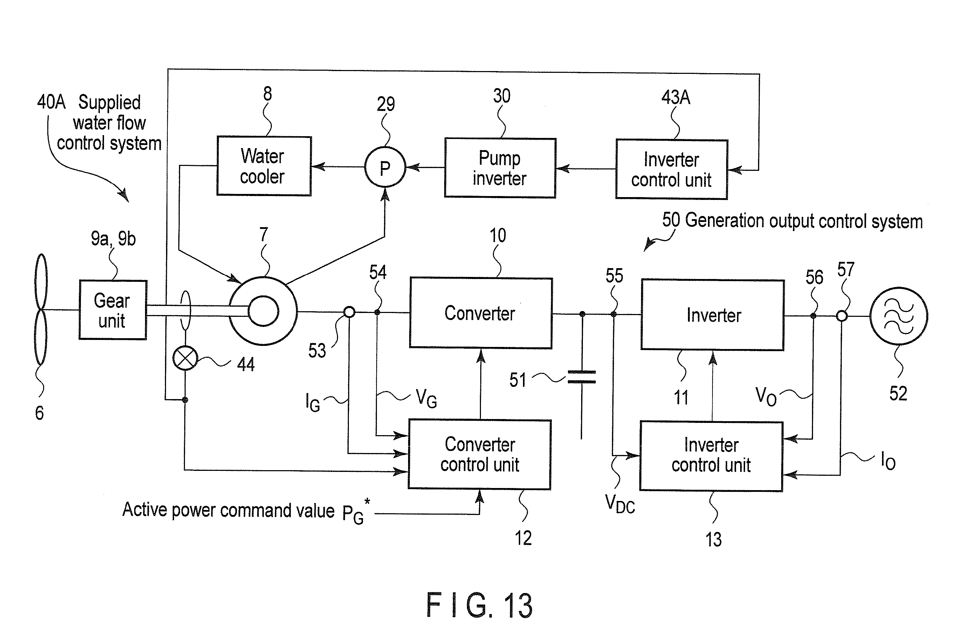

FIG. 13 is a block diagram showing an arrangement including a supplied water flow control system 40A configured to control the cooling water flow rate in accordance with the number of revolutions of the electric generator 7 and the generation output control system 50 conventionally used in general. Note that the generation output control system 50 has the same arrangement as in FIG. 11, and a description thereof will be omitted.

The supplied water flow control system 40A is provided with a tachometer 44 configured to detect the number of revolutions (N/min) of the electric generator 7. The number of revolutions (N/min) detected by the tachometer 44 is sent to an inverter control unit 43A.

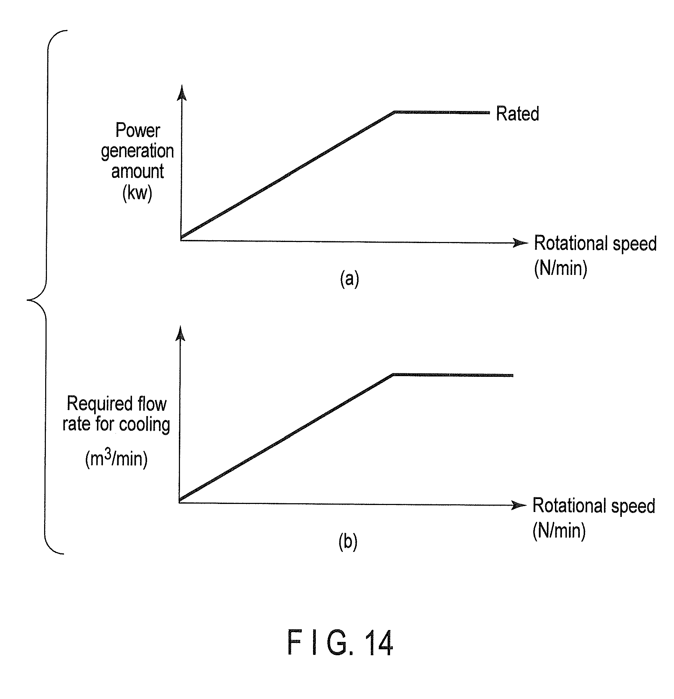

In general, as the number of revolutions (N/min) of the electric generator 7 increases, the power generation amount increases as indicated by (a) of FIG. 14. However, when the number of revolutions of the electric generator 7 is a predetermined number of revolutions (N/min) or more, the power generation amount is saturated at a rated power generation amount (kW). Hence, the power generation amount increases in proportion to the number of revolutions (N/min) of the electric generator 7 until the number of revolutions of the electric generator 7 reaches the predetermined number of revolutions (N/min).

As a result, the inverter control unit 43A on/off-controls the pump inverter 30 based on the power generation amount characteristic shown in (a) of FIG. 14 to increase the required flow rate for cooling in accordance with the number of revolutions (N/min) detected by the tachometer 44, as indicated by (b) of FIG. 14, thereby controlling the rotation of the flow control pump 29.

As a consequence, the cooling water 26 is circulated in the water cooling pipe 27 attached to the stator coil 25 while the flow rate of the cooling water 26 cooled by the water cooler 8 changes in accordance with the detected number of revolutions (N/min). Hence, even when the amount of heat generated in the stator coil 25 in accordance with the power generation amount of the electric generator 7 increases, the heat generated in the stator coil 25 can reliably be removed by increasing the flow rate of the supplied cooling water 26 circulating in the water cooling pipe 27.

### (3) Example of control of the cooling water flow rate based on a wind velocity

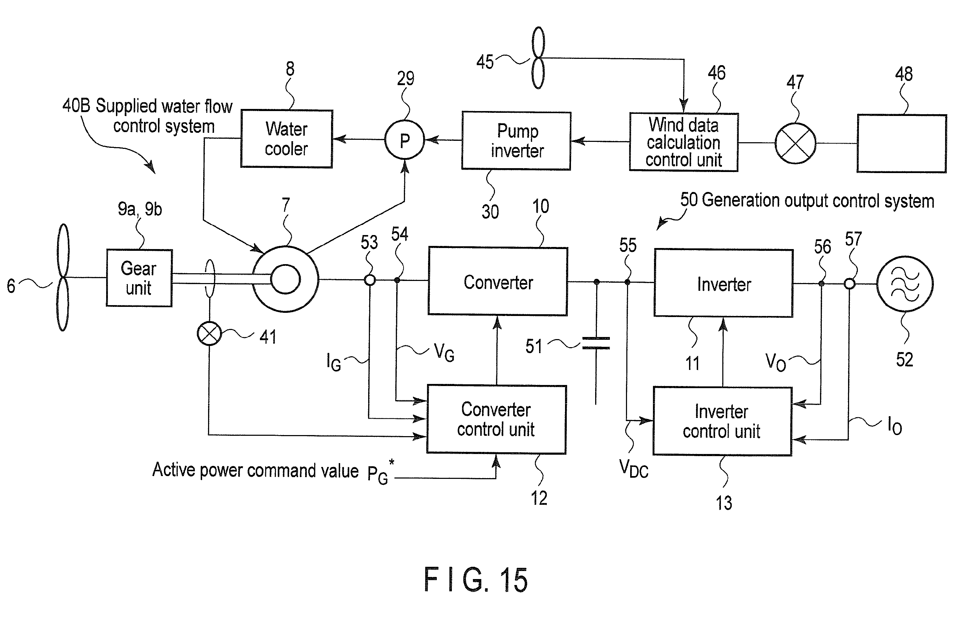

FIG. 15 is a block diagram showing an arrangement including a supplied water flow control system 40B configured to control the cooling water flow rate in accordance with a wind velocity and the generation output control system 50 conventionally used in general. Note that the generation output control system 50 has the same arrangement as in FIG. 11, and a description thereof will be omitted.

Generally, a wind power generation apparatus provides a wind vane and anemometer 45, for example, on the top of a nacelle 4 or the like, and executes, on wind direction data measured by the wind vane and anemometer 45, control of changing the orientation of the rotation plane of a rotor unit 6 of a horizontal axis wind turbine to the measured wind direction.

In this embodiment, the wind power generation apparatus provides a wind data calculation control unit 46 in the nacelle 4 in addition to the wind vane and anemometer 45. The wind data calculation control unit 46, for example, variably controls the flow rate of the cooling water circulating in the water cooling pipe 27 based on wind data such as a wind velocity measured by the wind vane and anemometer 45, thereby removing heat generated in the stator coil 25.

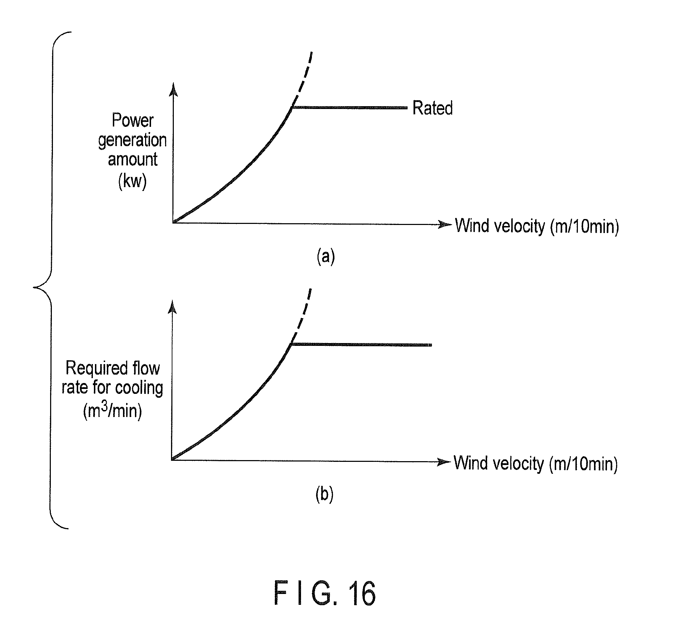

The electric generator 7 is configured to increase the power generation amount by a predetermined multiplier, for example, the third power along with an increase in the wind velocity and also obtain a rated power generation amount when the wind velocity value exceeds a predetermined value, as indicated by (a) of FIG. 16.

To do this, the wind data calculation control unit 46 calculates wind data such as a wind velocity every 10 min based on the measured output of the wind vane and anemometer 45. The wind data calculation control unit 46 grasps the power generation amount according to the wind data from the characteristic indicated by (a) of FIG. 16. The wind data calculation control unit 46 acquires the required flow rate for cooling corresponding to the power generation amount, as indicated by (b) of FIG. 16, and after that, on/off-controls the pump inverter 30 to control the rotational speed of the flow control pump 29, as described above.

The flow rate of the cooling water 26 cooled by the water cooler 8 changes upon controlling the rotational speed of the flow control pump 29, and the cooling water circulates through the water cooling pipe 27 in the stator coil 25. Hence, even when the amount of heat generated in the stator coil 25 in accordance with the power generation amount of the electric generator 7 increases, the cooling water 26 can be supplied into the water cooling pipe 27 at an appropriate flow rate in accordance with the heat amount. For this reason, even when the amount of heat generated in the stator coil 25 increases, the heat generated in the stator coil 25 can reliably be removed.

In this embodiment, the wind data calculation control unit 46 obtains wind data such as a wind velocity from the wind vane and anemometer 45. However, for example, the wind data calculation control unit 46 may be configured to receive wind data representing a time-stamped wind velocity or the like in a wind power generation apparatus installation area from a weather information service agency or monitoring control system 48 including a weather information storage server, which is connected to a network 47, or accept offer of time-stamped wind data and obtain estimated data concerning a wind in the wind power generation apparatus installation area a predetermined time (30 min or 1 hr) after the time represented by the time-stamped wind data, and on/off-control the pump inverter 30. (4) Example of control of the cooling water flow rate based on a cooling water temperature on the output side of the electric generator

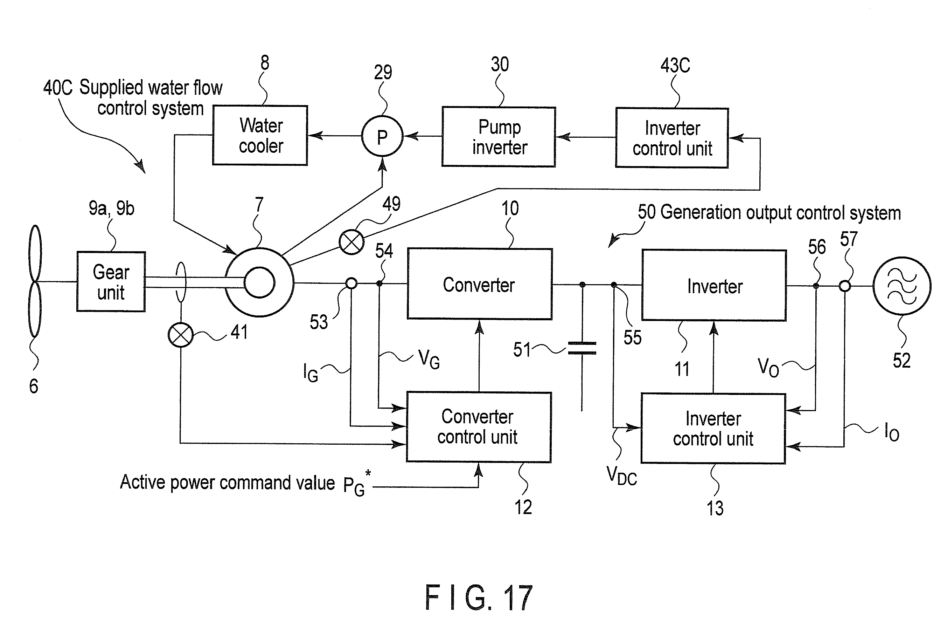

FIG. 17 is a block diagram showing an arrangement including a supplied water flow control system 40C configured to control the cooling water flow rate in accordance with a cooling water temperature and the generation output control system 50 conventionally used in general. Note that the generation output control system 50 has the same arrangement as in FIG. 11, and a description thereof will be omitted.

In this embodiment, the wind power generation apparatus mounts a temperature sensor 49 on, for example, the water cooling pipe 27 attached to the stator coil 25 of the electric generator 7. The temperature sensor 49 measures the temperature of the cooling water 26 on the outlet side of the water cooling pipe 27, and sends the temperature measurement result to an inverter control unit 43C.

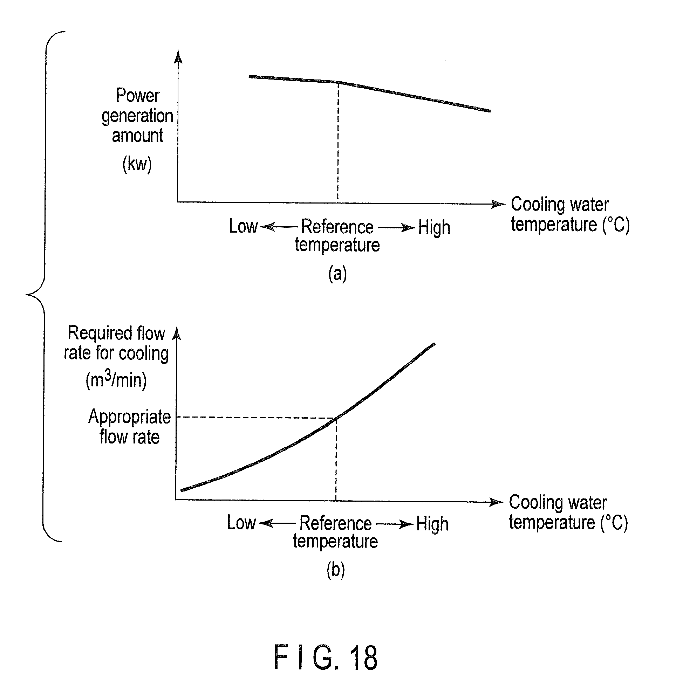

There is a characteristic representing that the power generation amount increases when the cooling water temperature is lower than a cooling water reference temperature corresponding to, for example, a predetermined wind velocity, and the power generation amount decreases when the cooling water temperature is higher than the cooling water reference temperature under a predetermined condition, as indicated by (a) of FIG. 18.

The inverter control unit 43C receives the cooling water temperature on the outlet side of the water cooling pipe 27 from the temperature sensor 49. When the cooling water temperature transitions from a temperature lower than the above-described cooling water reference temperature under a predetermined condition to a higher temperature, the inverter control unit 43C on/off-controls the pump inverter 30 so as to increase the required flow rate for cooling in accordance with a predetermined increase characteristic, as indicated by (b) of FIG. 18, thereby controlling the rotational speed of the flow control pump 29.

As a result, the flow rate of the cooling water 26 cooled by the water cooler 8 changes in accordance with the cooling water temperature on the outlet side upon controlling the rotational speed of the flow control pump 29, and the cooling water 26 is supplied to the water cooling pipe 27 in the stator coil 25. Hence, the cooling water 26 can be supplied into the water cooling pipe 27 at an appropriate flow rate in accordance with the amount of heat generated in the stator coil 25. For this reason, even when the amount of heat generated in the stator coil 25 increases, the generated heat can reliably be removed.

Hence, according to the above-described embodiments, the wind power generation apparatus arranges the water cooling pipe 27 between the lower stator coil 25a and the upper stator coil 25b, and supplies and circulates the cooling water 26 cooled by the water cooler 8 in the water cooling pipe 27. It is therefore possible to reliably remove heat generated in the stator coil 25. As a result, a particularly high cooling capability can be ensured as compared to a cooling means for, for example, circulating a coolant gas through the electric generator 7 using an external blower or the like.

When the water cooling pipe 27 is arranged along a side of each of the stator coils 25a and 25b, a wider cooling area can be ensured, and an increase in the temperature in the coil height direction can be leveled.

The wind power generation apparatus grasps the operation state of the electric generator 7 and controls the flow rate of the cooling water 26 supplied in the water cooling pipe 27, thereby decreasing the flow rate of the supplied cooling water 26 when the generated heat amount is small during, for example, a low-speed operation of the electric generator 7 and increasing the flow rate of the supplied cooling water 26 when the generated heat amount is large during, for example, a high-speed operation of the electric generator 7. It is therefore possible to raise the total operation efficiency of the electric generator 7.

An increase in the heat generation amount of the electric generator 7 is caused by an increase in the torque of the electric generator, an increase in the number of revolutions of the electric generator, an increase in the wind velocity, or a rise of the cooling water outlet temperature of the electric generator 7. Accordingly, the wind power generation apparatus grasps the magnitude of each measured element, and controls the increase/decrease of the flow rate of the cooling water 26 to the stator coil 25. Hence, heat generated in the stator coil 25 of the electric generator 7 can reliably be removed. This makes it possible to avoid an increase in the generator size or coil weight and reduce the influence on design and manufacture concerning maintenance of the strengths of structures such as the nacelle 4 storing the electric generator 7, the tower 3, and the like.

The states of the increase in the torque of the electric generator, the increase in the number of revolutions of the electric generator, the increase in the wind velocity, and the rise of the cooling water outlet temperature of the electric generator 7 as described above are normally information monitored to grasp the soundness of the wind power generation apparatus. Hence, preventive maintenance of the electric generator 7 can be done without adding special components.

Note that in the above embodiments, arrangements concerning water cooling of a wind power generation apparatus to remove heat generated in the stator coil 25 of the electric generator 7 have been described. An electric generator cooling method for removing heat generated in the stator coil 25 using these arrangements concerning water cooling can also be implemented.

As the electric generator cooling method, first, one of, for example, the rotation torque of the electric generator 7, the number of revolutions of the electric generator 7, wind data related to the wind power generation apparatus installation area, and the cooling water outlet temperature of the electric generator 7 is acquired. A required cooling water flow rate concerning the water cooler 8 that supplies the cooling water 26 into the water cooling pipe 27 arranged along the stator coil 25 attached in the slot groove 24 of the stator of the electric generator 7 is estimated based on the acquired physical variable data. The rotational speed of the pump 29 intervening between the water cooler 8 and the generator outlet-side end of the water cooling pipe 27 is controlled based on the estimated required cooling water flow rate, thereby controlling the increase/decrease of the flow rate of the cooling water 26 supplied into the water cooling pipe 27. This method can reliably remove heat generated in the stator coil 25.

The above-described embodiments have been presented by way of examples of a plurality of embodiments only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### Reference Signs List

2...base
3...tower
4...nacelle
5...main shaft
6...rotor unit
6a...hub
6b...blade
7...electric generator
8...water cooler
9...gear unit
10...converter
11...inverter
12...converter control unit
13...inverter control unit
22...rotor
23...stator
25...stator coil
25a...lower stator coil
25b...upper stator coil
26...cooling water
27...water cooling pipe
29...flow control pump
30...pump inverter
31...air cooling pipe
40, 40A, 40B, 40C...supplied water flow control system
41...revolution sensor
42...torque command generation unit
43, 43A, 43C...inverter control unit
44...tachometer
45...wind vane and anemometer
46...wind data calculation control unit
47...network
48...weather information service agency or monitoring control system including weather information storage server
49...temperature sensor
50...generation output control system

## Claims

1. A wind power generation apparatus including a rotor unit (6) including blades configured to convert wind energy into a rotary motion, and an electric generator (7) configured to convert rotary motion energy of the rotor unit into power, comprising:
a water cooling pipe (27) arranged between a lower stator coil (25a) and an upper stator coil (25b) which constitute a stator coil (25) attached to a slot groove of a stator (23) of the electric generator; and
a water cooler (8) configured to supply cooling water into the water cooling pipe and remove heat generated in the stator coil.

2. A wind power generation apparatus including a rotor unit (6) including blades configured to convert wind energy into a rotary motion, and an electric generator (7) configured to convert rotary motion energy of the rotor unit into power, comprising:
water cooling pipes (27) arranged on the same side surface sides of a lower stator coil (25a) and an upper stator coil (25b) which constitute a stator coil (25) attached to a slot groove of a stator (23) of the electric generator or on side surface sides different from each other; and
a water cooler (8) configured to supply cooling water into the water cooling pipes and remove heat generated in the stator coil.

3. A wind power generation apparatus including a rotor unit (6) including blades configured to convert wind energy into a rotary motion, and an electric generator (7) configured to convert rotary motion energy of the rotor unit into power, comprising:
a water cooling pipe including two side water cooling pipes (27L, 27R) arranged on side surface sides of a lower stator coil (25a) and an upper stator coil (25b) which constitute a stator coil (25) attached to a slot groove of a stator (23) of the electric generator, the side surface sides being different from each other, and an intermediate water cooling pipe (27C) intervening between the lower stator coil and the upper stator coil and communicating with the two side water cooling pipes; and
a water cooler (8) configured to supply cooling water into the water cooling pipe and remove heat generated in the stator coil.

4. The water-cooled wind power generation apparatus according to claim 1, wherein the water cooling pipe arranged along the lower stator coil and the upper stator coil attached in the slot groove is arranged in a meandering state while sequentially running over to a plurality of adjacent slot grooves.

5. The water-cooled wind power generation apparatus according to claim 1, further comprising:
a flow control pump (29) provided between the water cooler and a generator outlet-side end of the water cooling pipe;
a torque command generation unit (42) configured to generate a torque command value based on a rotational speed of the electric generator; and
a control unit (43) configured to control the rotational speed of the flow control pump and control a flow rate of the cooling water supplied from the water cooler to the water cooling pipe based on the torque command value generated by the torque command generation unit.

6. The water-cooled wind power generation apparatus according to claim 1, further comprising:
a flow control pump (29) provided between the water cooler and a generator outlet-side end of the water cooling pipe;
a revolution detection unit (44) configured to detect the number of revolutions of the electric generator; and
a control unit (43A) configured to control a rotational speed of the flow control pump and control a flow rate of the cooling water supplied from the water cooler to the water cooling pipe based on revolution data detected by the revolution detection unit.

7. The water-cooled wind power generation apparatus according to claim 1, further comprising:
a flow control pump (29) provided between the water cooler and a generator outlet-side end of the water cooling pipe; and
a wind data calculation control unit (46) configured to acquire wind data in an installation area of the electric generator and control a rotational speed of the flow control pump and control a flow rate of the cooling water supplied from the water cooler to the water cooling pipe based on the acquired wind data.

8. The water-cooled wind power generation apparatus according to any one of claims 1 to 4, further comprising:
a flow control pump (29) provided between the water cooler and a generator outlet-side end of the water cooling pipe;
a temperature detection unit (49) configured to detect a temperature of the cooling water on a side of an output of the stator coil, which is supplied to the water cooling pipe; and
a control unit (43C) configured to control a rotational speed of the flow control pump and control a flow rate of the cooling water supplied from the water cooler to the water cooling pipe based on generator outlet-side temperature data of the cooling water detected by the temperature detection unit.

9. An electric generator cooling method for a water-cooled wind power generation apparatus which includes a rotor unit (6) including blades configured to convert wind energy into a rotary motion, an electric generator (7) configured to convert rotary motion energy of the rotor unit into power, and a water cooler (8), and cools a stator coil (25) of the electric generator, the method comprising:
acquiring data that affects a power generation amount of the electric generator;
estimating, based on the acquired data, a required flow rate of the water cooler configured to supply water into a water cooling pipe arranged along the stator coil attached in a slot groove of a stator of the electric generator; and
controlling, based on the estimated required flow rate of cooling water, a rotational speed of a pump intervening between the water cooler and a generator outlet-side end of the water cooling pipe, increasing/decreasing the flow rate of the cooling water supplied into the water cooling pipe, and removing heat generated in the stator coil.

10. The electric generator cooling method for the wind power generation apparatus according to claim 9, wherein the acquired data is one of a rotation torque of the electric generator, the number of revolutions of the electric generator, wind data related to an installation area of the wind power generation apparatus, and a cooling water outlet temperature of the electric generator.
